## Europäisches Patentamt

## European Patent Office

## Office européen des brevets

(19)

(11) Numéro de publication: **0 214 917**
**B1**

(12) **FASCICULE DE BREVET EUROPEEN**

(45) Date de publication du fascicule du brevet: **14.11.90**

(51) Int. Cl.⁵: **F 16 B 15/00,** F 16 L 59/00 //
F24H9/02

(21) Numéro de dépôt: **86440054.4**

(22) Date de dépôt: **02.07.86**

(54) **Attache en forme d'agrafe pour la réunion des deux bords d'un revêtement enveloppant.**

(30) Priorité: **12.07.85 FR 8510849**

(43) Date de publication de la demande:
**18.03.87 Bulletin 87/12**

(45) Mention de la délivrance du brevet:
**14.11.90 Bulletin 90/46**

(84) Etats contractants désignés:
**BE CH DE GB IT LI NL**

(56) Documents cités:
**FR-A-1 336 740**
**FR-A-2 383 587**
**GB-A-1 113 656**
**US-A-1 921 999**

(73) Titulaire: **DE DIETRICH & Cie, Société dite**
**F-67110 Niederbronn-Les-Bains (FR)**

(72) Inventeur: **Fuhlhaber, Michel**
**5 rue des Eglantiers Reichshoffen-Ville**
**F-67110 Niederbronn-Les-Bains (FR)**
Inventeur: **Paradis, Marcel**
**1 rue de l'Osterhardt**
**F-67580 Mertzwiller (FR)**
Inventeur: **Hintermayer, Paul**
**5 rue de l'Eglise Gundershoffen**
**F-67110 Niederbronn-Les-Bains (FR)**

(74) Mandataire: **Metz, Paul**
**CABINET METZ PATNI 95 Rue la Ganzau**
**F-67100 Strasbourg (FR)**

Courier Press, Leamington Spa, England.

## Description

La présent invention se rapporte à une bande d'attaches en tôle pour la réunion des bords d'un revêtement de protection ou d'isolation thermique à utiliser plus particulièrement dans les appareils de chauffage notamment les chaudières.

L'isolation thermique des chaudières est réalisée par un revêtement de laine de verre ou de mousse synthétique présentant sur l'une de ses faces une finition assurant la propreté et l'esthétique.

Le corps de chauffe et les ballons d'eau chaude sanitaire associés sont entourés latéralement du revêtement isolant à la manière d'un manteau dont le maintien résulte de la jonction et la réunion de ses bords latéraux par un ruban adhésif.

Malheureusement, l'adhérence de ce ruban sur le revêtement de finition s'avère faible en raison des microfibres de verre qui le traversant et de la chaleur dégagée par la chaudière. Il en est de même pour tous les types de fermeture à effet adhésif.

D'autre part, dans le domaine médical on utilise des attaches métalliques munies de pointes pour immobiliser l'extrémité d'un bandage, par exemple celle décrite dans le brevet US—A—1 921 999. Cette attache de forme générale rectangulaire comporte à chaque extrémité plusieurs petites pointes triangulaires sorties dès la fabrication, et présente un léger galbe destiné à épouser la courbure du bandage. Cette attache ne comporte pas de moyens de préhension et n'est pas utilisée en position coudée, elle est plus particulièrement adaptée aux bandes de tissus fins et sensiblement élastiques dans lesquelles les petites pointes s'accrochent facilement.

La présente invention a pour but de remédier à l'inconvénient des fermetures à effet adhésif, de faciliter la préhension et la pose de l'attache sur un revêtement en laine de verre comme celui qui'on utilise sur les chaudières, tout en ayant un coût de revient modique.

A cet effet, l'invention consiste en une bande de tôle découpée de manière à former une suite d'attaches linéaires pour la réunion des deux bords d'un revêtement enveloppant, des lignes de prédécoupe étant prévues dans ladite bande entre les attaches pour un fractionnement ultérieur des attaches, chaque attache comportant un corps de forme générale rectangulaire pourvu d'une part à chacune de ses extrémités d'une patte d'accrochage, délimitée par au moins une découpe formant ainsi au moins une pointe dirigée vers le centre de l'attache, et un espace de faible largeur permettant un pliage ultérieur dans une position d'utilisation, position dans laquelle chaque patte dégage de part et d'autre du plan de l'attache en configuration plane:

—vers le base une extrémité d'accrochage formée par ladite pointe;

—vers le haut une zone de préhension;

le corps étant pourvu d'autre part d'une découpe centrale pour faciliter son pliage dans le cas d'une utilisation en configuration coudée.

Les principaux avantages de l'invention concernent son prix de revient très inférieur à celui de ruban adhésif et sa mise en place rapide et aisée.

En effet, elle peut être fabriquée en continu dans une bande de tôle par un outil de découpe.

La conjonction de ces deux effets permet de réaliser des économies substantielles sur de grandes séries.

Les caractéristiques de l'invention et d'autres avantages sont consignés dans la description qui suit effectuée à titre d'exemple non limitatif sur plusieurs variantes d'exécutions en référence aux dessins accompagnants dans lesquels:

la figure 1 est une vue en perspective de la variante de base d'une attache en configuration droite;

la figure 2 est une vue en perspective de la variante de base de l'invention en configuration coudée;

la figure 3 est une vue partielle de la bande de rôle telle que sortant de l'outil de découpe;

les figures 4 et 5 dont des vues de profil et en plan d'une autres variante;

les figures 6 et 7 sont des vues de profil et en plan d'une variante supplémentaire;

la figure 8 est une vue schématique en perspective de deux exemples d'utilisation.

L'attache selon l'invention est destinée principalement à réunir et à maintenir les deux bords d'un revêtement enveloppant, par exemple une isolation de chaudière ou de ballon d'eau chaude, mais on peut envisager beaucoup d'autres applications telles par exemple le maintien de tissus ou de toile de protection ou d'esthétique sur un support mou ou tout autre application analogue.

Par ailleurs, sa fabrication par découpage à la presse dans une bande de tôle continue présente un avantage considérable au niveau de son prix de revient ou de son conditionnement. En effet, il suffit d'individualiser les attaches par fractionnement le long des lignes de prédécoupe pour les trouver directement prêtes à l'emploi.

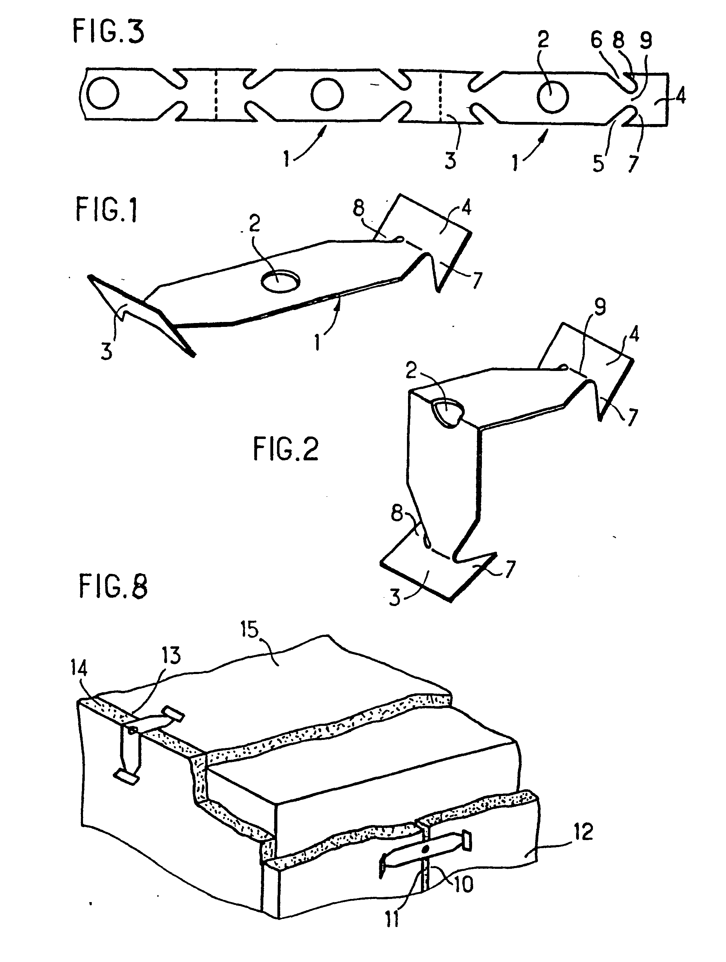

L'attache selon l'invention se présente sous la forme générale d'un agrafe à corps plat 1 de forme générale rectangulaire, pourvu en partie centrale d'une ou de plusieurs ouverture(s), par exemple circulaire(s), telle(s) que 2 destinée(s) à faciliter le pliage nécessaire pour une utilisation en configuration coudée représentée sur les figures 2 et 8.

En raison de sa forme, on emploiera ci-après indifféremment les termes d'attache ou d'agrafe pour désigner l'invention.

Les extrémités du corps 1 sont conformées en pattes d'accrochage pliables 3 et 4 dont la forme générale peut varier légèrement.

A titre illustratif, deux exemples de variantes possibles sont représentés en figures de 4 à 7.

Dans le mode d'exécution de base, les pattes d'accrochage 3 et 4 sont formées par les extrémités de l'agrafe et délimitées par deux découpes symétriques convergentes 5 et 6 pratiquées à une distance de l'extrémité de l'ordre de la largeur de l'agrafe.

Les découpes sont ouvertes du côté des bords longitudinaux de l'attache et se terminent de l'autre côté par une extrémité en arrondi pour éviter l'effet de cisaillement du revêtement.

Ces découpes délimitent sur chaque patte d'accrochage deux pointes divergentes symétriques antirecul 7 et 8.

La plus faible largeur du corps 1 au niveau de l'espace 9 situé entre les pointes 7 et 8 permet le pliage de chaque extrémité par simple levage comme le montrent les figures et 3.

La figure 8 monte un exemple d'utilisation pour la réunion des deux bords verticaux d'extrémité 10 et 11 d'un revêtement thermiquement isolant de surface latérale 12 en configuration non coudée et la réunion des bords horizontaux 13 et 14 entre un panneau 15 de couverture supérieur en configuration coudée.

On remarque l'utilisation particulièrement simple et la pose tout à fait aisée.

Par ailleurs, la longueur des pointes 7 et 8 garantit une bonne erficacité d'accrochage et l'arrondi d'extrémité des découpes 5 et 6 évite le cisaillage du revêtement.

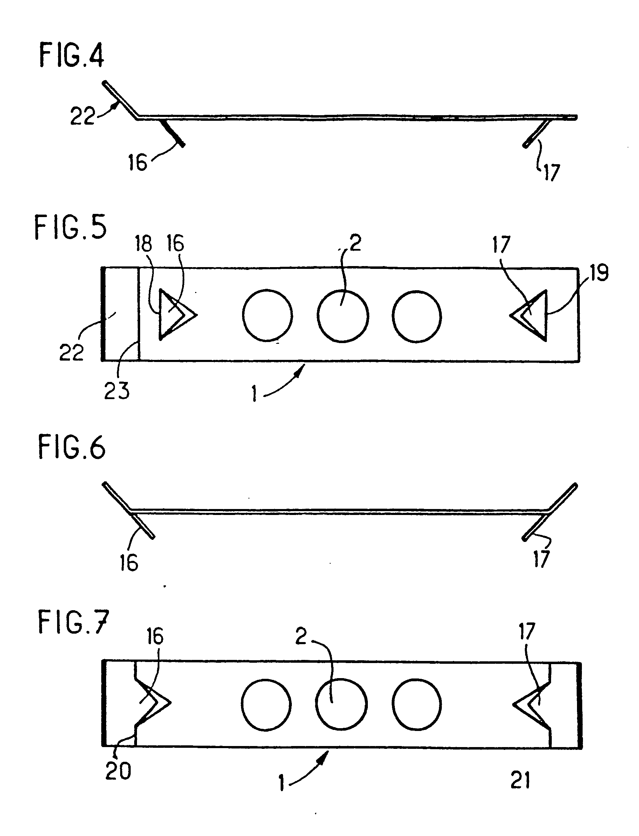

Les deux types de variantes représentées en figure 4 et 5 puis 6 et 7 sont à simple pointe d'accrochage triangulaire 16 et 17 pliable autour de leur base 18 et 19 à une faible distance de l'extrémité (figures 4 et 5), ou pliable autour d'une ligne transversale 20 et 21 passant par leur base (figures 6 et 7) permettant un pliage plus facile des extrémités réalisant ainsi en une seule pointe l'équivalent des pattes d'accrochage de la variante de base.

La variante représentée en figures 4 et 5 présente en plus à l'une de ses extrémités une patte de préhension 22 inclinable autour d'une ligne transversale 23.

## Revendications

1. Bande de tôle découpée de manière à former une suite d'attaches linéaires pour la réunion des deux bords d'un revêtement enveloppant, des lignes de prédécoupe étant prévues dans ladite bande entre les attaches pour un fractionnement ultérieur des attaches, chaque attache comportant un corps de forme générale rectangulaire pourvu d'une part à chacune de ses extrémités d'une patte d'accrochage (3, 4), délimitée par au moins une découpe formant ainsi au moins une pointe (7, 8, 16, 17) dirigée vers le centre de l'attache, et un espace (9) de faible largeur permettant un pliage ultérieur dans une position d'utilisation, position dans laquelle chaque patte dégage de part et d'autre du plan de l'attache en configuration plane:

—vers le bas une extrémité d'accrochage formée par ladite pointe (7, 8, 16, 17);

—vers le haut une zone de préhension;

le corps (1) étant pourvu d'autre part d'une découpe centrale (2) pour faciliter son pliage dans le cas d'une utilisation en configuration coudée.

2. Bande de tôle découpée selon la revendication 1 caractérisée en ce que les pointes (7) sont doubles et symétriques, en disposition divergente vers la découpe centrale (2).

3. Bande de tôle découpée selon les revendications 1 et 2 caractérisée en ce que les pointes (7), sont formées et délimitées par deux découpes convergentes (5, 6) se terminant chacune, côté intérieur, par un arrondi permettant d'éviter le cisaillement, lors du pliage.

4. Bande de tôle découpée selon la revendication 1 caractérisée en ce que les pattes d'accrochage (16, 17) sont uniques, découpées dans chaque extrémité en retrait par rapport au bord transversal d'extrémité.

5. Bande de tôle découpée selon la revendication 4 caractérisée en ce que les pattes d'accrochage uniques (16, 17) sont triangulaire, pliables autour de leur base, l'espace en retrait jusqu'au bord transversal d'extrémité constituant une zone de préhension.

6. Bande de tôle découpée selon la revendication 1 caractérisée en ce que la zone centrale comporte plusieurs découpes.

## Patentansprüche

1. Blechstreifen, der so gestanzt ist, daß sich eine Reihe von geraden Verschlüssen zum Verbinden der zwei Ränder einer Außenverkleidung ergibt, sowie Vorschneidelinien, welche an dem Streifen zwischen den Verbindungsstücken zwecks späterer Teilung der Verschlüsse vorgesehen sind, wobei jeder Verschluss ein im allgemeinen rechteckig geformtes Hauptteil aufweist, das einerseits an jedem seiner Enden mit einer Einhaklasche (3, 4) versehen ist, die von mindestens einem, mindestens eine Spitze (7, 8, 16, 17) bildenden Ausschnitt begrenzt ist, der zur Mitte des Verschlusses hin gerichtet ist, und einen Bereich (9) von geringer Breite entstehen läßt, der ein späteres Biegen in eine Gebrauchsstellung ermöglicht, eine Stellung, bei welcher jede Lasche, beiderseits des als Ebene gedachten Verschlusses in seiner flachen Ausführungsform folgendes vorspringen läßt:

—nach unten eine Einhakende, gebildet aus der Spitze (7, 8, 16, 17);

—nach oben einen Bereich zum Anfassen;

wobei das Hauptteil (1) andererseits mit einem zentralen Ausschnitt (2) versehen ist, um im Falle einer Anwendung in abgebogener Ausführungsform dessen Abbiegung zu erleichtern.

2. Gestanzter Blechstreifen nach Anspruch 1, dadurch gekennzeichnet, daß die Spitzen (7, 8) doppelt und symmetrisch sind, in einer zu zentralen Ausschnitt (2) hin divergierenden Stellung.

3. Gestanzter Blechstreifen nach den Ansprüchen 1 und 2, dadurch gekennzeichnet, daß man die Spitzen (7, 8) durch zwei konvergente Ausschnitte (5, 6) bildet, wobei jeder innen mit einer Ausrundung endet, wodurch sich beim Biegen das Einschneiden vermeiden läßt.

4. Gestanzter Blechstreifen nach Anspruch 1, dadurch gekennzeichnet, daß die Einhaklaschen (16, 17) nur einfach vorhanden sind, ausgestanzt an jedem Ende, an einer von der querlaufenden Endkante zurückversetzten Stelle.

5. Gestanzter Blechstreifen nach Anspruch 4, dadurch gekennzeichnet, daß die nur einfach vorhandenen Einhaklaschen (16, 17) die Form eines Dreiecks haben und um dessen Grundlinie biegbar sind, wobei die Fläche von der zurückversetzten Stelle bis zur querlaufenden Endkante eine Zone zum Anfassen darstellt.

6. Gestanzter Blechstreifen nach Anspruch 1, dadurch gekennzeichnet, daß der mittlere Bereich mehrere Ausschnitte aufweist.

## Claims

1. Sheet metal strip cut so as to form a succession of linear attachments for joining of the two edge of an enveloping covering, pre-cut lines being provided in the said strip between the attachments for a subsequent dividing up of the attachments, each attachment comprising a body of rectangular general shape provided on the one hand at each of its ends with a fastening tab (3, 4), de-limited by at least one cutaway thus forming at least one point (7, 8, 16, 17) directed towards the centre of the attachment, and a space (9) of small width permitting subsequent bending into a working position, in which position each tab disengages on either side of the plane of the attachment in flat configuration:

—downwards, a fastening extremity formed by the said point (7, 8, 16, 17);

—upwards, a gripping zone;

the body (1) being provided on the other hand with a central cutaway (2) to facilitate its bending in the case of use in angled configuration.

2. Sheet metal strip cut out as claimed in claim 1 characterised in that the points (7, 8) are double and symmetrical, in an arrangement divergent towards the central cutaway (2).

3. Sheet metal strip cut out as claimed in claims 1 and 2 characterised in that the points (7, 8) are formed and delimited by two convergent cutaways (5, 6), each inwardly terminating in a round-off preventing shearing during the bending.

4. Sheet metal strip cut out as claimed in claim 1 characterised in that the fastening tabs (16, 17) are single, cut from either extremity, set back with respect to the transverse extremity edge.

5. Sheet metal strip cut out as claimed in claim 4 characterised in that the single fastening tabs (16, 17) are triangular, pliable about their bases, the space set back as far as the transverse extremity edge constituting a gripping zone.

6. Sheet metal strip cut out as claimed in claim 1 characterised in that the central zone comprises several cutaways.

FIG.3

FIG.1

FIG.2

FIG.8

FIG.4

FIG.5

FIG.6

FIG.7